Europäisches Patentamt

European Patent Office

Office européen des brevets

(19)

(11) Veröffentlichungsnummer: **0 271 729**
**B1**

(12)

# EUROPÄISCHE PATENTSCHRIFT

(45) Veröffentlichungstag der Patentschrift:
**12.09.90**

(51) Int. Cl.⁵: **F16M 11/04**

(21) Anmeldenummer: **87116983.5**

(22) Anmeldetag: **17.11.87**

(54) **Stativ mit einem um eine Achse schwenkbaren Ausleger und einem Massenausgleich.**

(30) Priorität: **16.12.86 DE 3642955**

(43) Veröffentlichungstag der Anmeldung:
**22.06.88 Patentblatt 88/25**

(45) Bekanntmachung des Hinweises auf die Patenterteilung:
**12.09.90 Patentblatt 90/37**

(84) Benannte Vertragsstaaten:
**AT CH DE ES FR GB IT LI**

(56) Entgegenhaltungen:
**DE-U- 8 436 137**
**US-A- 2 287 577**
**US-A- 4 158 489**
**US-A- 4 166 602**
**US-A- 4 591 122**

(73) Patentinhaber: **Friedhelm Kreuzer GmbH,**
**Benzstrasse 26, D-8039 Puchheim(DE)**

(72) Erfinder: **Kandler, Georg, Wildweg 1,**
**D-8034 Germering(DE)**

(74) Vertreter: **Prüfer, Lutz H., Dipl.-Phys., Harthauser**
**Strasse 25d, D-8000 München 90(DE)**

## Beschreibung

Die Erfindung betrifft ein Stativ mit einem um eine Achse schwenkbaren Ausleger nach dem Oberbegriff des Patentanspruches 1.

Ein derartiges Stativ ist aus der US-A 4 591 122 bekannt. Bei diesem ist eine Gasdruckfeder vorgesehen, die mit ihrem einen Ende an dem Basisteil umd mit ihrem anderen Ende an einem parallelogrammartig ausgebildeten verschiebbaren Teil befestigt ist. Die Gasdruckfeder ist so ausgewählt, daß das Gewicht des von dem Stativ zu tragenden Gegenstandes ausgeglichen wird und somit beim Verschwenken lediglich die Reibung überwunden werden muß. Es besteht bei solchen Stativen jedoch das Problem, daß immer dann, wenn ein Gegenstand mit einem anderen Gewicht zu tragen ist, eine andere Gasdruckfeder eingesetzt werden muß.

Dieser Austausch ist wegen der dabei bestehenden Verletzungsgefahr nicht ungefährlich, da in einer nicht entspannten Gasdruckfeder eine erhebliche Energie gespeichert ist.

Aufgabe der Erfindung ist es, das Stativ so abzuwandeln, daß ein ungefährliches Auswechseln der Gasdruckfedern möglich wird.

Diese Aufgabe wird durch ein Stativ der eingangs beschriebenen Art mit den Merkmalen des kennzeichnenden Teiles des Patentanspruches 1 gelöst. Dadurch wird erreicht, daß der schwenkbare Ausleger in einer Stellung arretiert wird, in der die Gasdruckfeder nahezu keinen Druck mehr ausübt und ohne Gefahr aus ihrer Lagerung entnommen und durch eine andere Gasdruckfeder ersetzt werden kann.

Weitere Merkmale und Zweckmäßigkeiten der Erfindung ergeben sich aus der Beschreibung eines Ausführungsbeispieles anhand der Figuren. Die Figuren zeigen:

Fig. 1 eine seitliche Ansicht durch einen schwenkbaren Ausleger mit eingesetzter Gasdruckfeder, wobei die Abdeckung abgeschnitten ist; und

Fig. 2 ein Detail einer geänderten Ausführungsform.

Das Stativ 1 umfaßt eine Säule 2 und einen damit gelenkig verbundenen Ausleger 3 sowie eine damit gelenkig verbundene Stativkopfsäule 4.

Der Ausleger 3 umfaßt ein erstes Hebelteil 5. Dieses ist über eine fest mit ihm verschweißte Gabel 6 und eine erste Achse 7 mit der Säule 2 schwenkbar verbunden. Oberhalb des ersten Hebelteiles 5 ist ein relativ zu diesem bewegliches zweites Hebelteil 8 vorgesehen. Dieses ist an seinem der Säule 2 zugewandten Ende über eine zweite Achse 9 mit der Säule 2 schwenkbar verbunden. Das erste Hebelteil ist an seinem freien Ende über eine dritte Achse 12 mit einem Schenkelteil 11 gelenkig verbunden. Das Schenkelteil 11 ist ferner über eine vierte Achse 10 mit dem freien Ende des zweiten Hebelteiles 8 verbunden. Die vier Achsen 7, 9, 10 und 12 sind parallel zueinander ausgerichtet und so angeordnet, daß sie die vier Ecken eines Parallelogrammes bilden.

Das erste Hebelteil 5 weist in einem ersten Abstand von der Säule 2 ein erstes Widerlager zur Aufnahme einer Gasdruckfeder 14 auf. Das zweite Hebelteil 8 weist ein zweites Widerlager 15 zur Aufnahme des zweiten Endes der Gasdruckfeder 14 auf. Der Abstand des zweiten Widerlagers von der Säule, der größer ist als der erste Abstand, ist so gewählt, daß die Gasdruckfeder so an den beiden Hebelteilen angreift, daß ein Massenausgleich für die von dem Stativ aufzunehmende Last erfolgt.

Die Widerlager 13, 15 weisen einander zugewandte Bohrungen 16, 17 auf, die jeweils so ausgebildet sind, daß die Gasdruckfeder 14 mit ihren in die Bohrung einzusetzenden freien Enden ein um die Achse der Bohrung erstreckendes Winkelspiel aufweist, damit die Gasdruckfeder beim Verschwenken des Auslegers um die Achsen 7, 9 der Bewegung des Parallelogrammes folgen kann.

Das Widerlager 15 weist auf seiner dem Widerlager 13 abgewandten Seite der Bohrung 17 ein Innengewinde auf, in welches eine Schraube 18 so eingesetzt ist, daß diese die Gasdruckfeder 14 in ihrer Position zwischen den beiden Widerlagern hält.

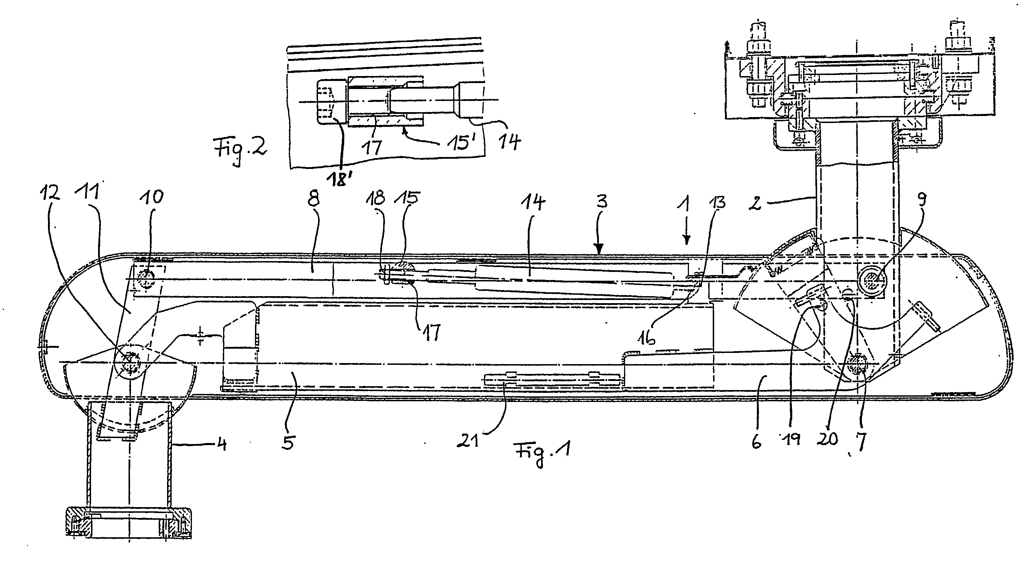

Wie aus Fig. 1 ersichtlich ist, weist die Gabel 6 in einem Abstand von der Achse 7 eine Bohrung 19 auf. Auf dem von der Mitte der Achse 7 aus gesehen gleichen Radius ist ferner eine entsprechende Bohrung 20 in der Säule 2 vorgesehen. Die beiden Bohrungen 19, 20 sind so aufeinander abgestimmt, daß sie in der Winkelstellung des Auslegers 3 zur Säule 2 zur Deckung gelangen, in der die Gasdruckfeder 14 sich in annähernd ausgefahrener und entspannter Stellung befindet.

Die in Figur 2 gezeigte Ausführungsform unterscheidet sich gegenüber der oben beschriebenen Ausführungsform lediglich dadurch, daß anstelle der Schraube 18 mit Kontermutter eine Imbusschraube 18' mit Schnorrsicherung vorgesehen ist.

Zum Auswechseln der Gasdruckfeder 14 wird der Ausleger in die Stellung geschwenkt, in der die Bohrungen 19 und 20 zur Deckung gebracht sind. Dann wird eine bolzenartige Stativarmsperre 21 in die zur Deckung gebrachten Bohrungen eingesteckt, so daß der Ausleger 3 und die Säule 2 formschlüssig in ihrer Winkelstellung zueinander arretiert sind. Anschließend wird die Schraube 18 bzw. 18' gelöst. Dabei wird die Schraube so weit herausgedreht, daß die Gasdruckfeder 14 vollständig entspannt ist und aus dem Widerlager 13 und damit insgesamt herausnehmbar ist. Es wird dann eine andere Gasdruckfeder zunächst in das Widerlager 15 und dann in das Widerlager 13 eingesetzt. Anschließend wird die Schraube 18 bzw. 18' wieder so weit eingeschraubt, daß die Gasdruckfeder zwischen den beiden Widerlagern gehalten wird. Danach wird durch Herausnehmen der Stativarmsperre 21 die Verriegelung wieder gelöst.

In dem oben beschriebenen Ausführungsbeispiel erfolgt die Verriegelung derart, daß die Gasdruckfeder 14 sich in annähernd ausgefahrener und entspannter Stellung befindet. Die Bohrungen sind in einer anderen Ausführungsform so angeordnet, daß sich die Gasdruckfeder in der Verriegelungsstellung in vollständig ausgefahrener und entspannter Stellung befindet. Diese Ausführungsform hat zur Voraussetzung, daß zum Bewegen des Armes in die dafür erforderliche Stellung von der Bedienungsperson eine geringe Kraft aufgebracht werden muß. Bei dieser Ausführungsform besteht der Vorteil, daß die Schraube 18, 18' weniger weit zurückgedreht werden muß.

In der oben beschriebenen Ausführungsform erfolgte die Verriegelung durch Einsetzen der Stativarmsperre 21 in Bohrungen des ersten Hebelteiles und der Säule. Die Verriegelung kann aber auch über eine im zweiten Hebelteil vorgesehene Bohrung zusammen mit der im Stativ vorgesehenen Bohrung erfolgen. Entscheidend ist, daß die jeweilige Verriegelung formschlüssig ist und ein unbeabsichtigtes Lösen der Verriegelung ausgeschlossen ist.

## Patentansprüche

1. Stativ mit einer Säule (2) und einem damit verbundenen um eine Achse schwenkbaren Ausleger (3) und einer Gasdruckfeder (14) zum Massenausgleich, bei dem der Ausleger (3) gegenüber der Säule (2) verriegelbar ist, dadurch gekennzeichnet, daß eine formschlüssige Verriegelung (19, 20, 21) vorgesehen ist, die nur in der Stellung erfolgen kann, in der sich die Gasdruckfeder (14) in wenigstens nahezu ausgeschobener, entspannter Stellung befindet.

2. Stativ nach Anspruch 1, dadurch gekennzeichnet, daß zum formschlüssigen Verriegeln der Ausleger (3) und die Säule (2) Bohrungen (19, 20) zum Aufnehmen eines Sperrelementes (21) aufweisen, die nur in der Schwenkstellung des Auslegers deckungsgleich sind, in der sich die Gasdruckfeder (14) in wenigstens nahezu ausgeschobener Stellung befindet.

3. Stativ nach Anspruch 2, dadurch gekennzeichnet, daß der Ausleger ein erstes Hebelteil (5) und ein gegen dieses bewegbares zweites Hebelteil (8) aufweist, die jeweils mit einem Ende mit der Säule (2) und an ihrem anderen Ende mit einem Verbindungsstück (11) nach Art eines Parallelogrammes gelenkig verbunden sind und daß die Bohrung (19) des Auslegers in einem der Hebelteile (5, 8) vorgesehen ist.

4. Stativ nach Anspruch 3, dadurch gekennzeichnet, daß die beiden Hebelteile (5, 8) jeweils ein Widerlager (13, 15) zur Aufnahme der freien Enden der Gasdruckfeder (14) aufweisen und daß eines (15) der Widerlager im verriegelten Zustand gegen das andere (13) auf einen größeren Abstand hin versetzbar ist.

5. Stativ nach Anspruch 4, dadurch gekennzeichnet, daß eines der Widerlager (15) eine Gewindebohrung (17) aufweist, in deren der Gasdruckfeder abgewandten Ende eine Schraube (18) vorgesehen ist, an der die Gasdruckfeder (14) anliegt.

6. Stativ nach Anspruch 5, dadurch gekennzeichnet, daß die Gasdruckfeder (14) durch wenigstens teilweises Herausschrauben der Schraube (18) vollständig entspannt aus den Widerlagern (13, 15) herausnehmbar ist.

7. Stativ nach einem der Ansprüche 4 bis 6, dadurch gekennzeichnet, daß die Widerlager (13, 15) als Löcher ausgebildet sind, in denen die eingesetzten Enden der Gasdruckfeder ein Spiel innerhalb eines Winkelbereiches um die Mittenachse besitzen.

## Claims

1. Stand having a column (2) and an extension arm (3), which is connected to said column and can be swivelled about an axis, and a gas pressure spring (14) for mass balancing, in which the extension arm (3) can be locked in relation to the column (2), characterized in that a positive lock (19, 20, 21) is provided which can only be effected in that position in which the gas pressure spring (14) is in an at least almost extended, unstressed position.

2. Stand according to Claim 1, characterized in that, for positive locking, the extension arm (3) and the column (2) have bore holes (19, 20) to receive a blocking element (21), which bore holes are only congruent in the swivelled position of the extension arm, in which position the gas pressure spring (14) is in an at least almost extended position.

3. Stand according to Claim 2, characterized in that the extension arm has a first lever part (5) and a second level part (8) being movable against said first lever part, which lever parts are each connected in an articulated manner with one end to the column (2) and at their other end to a connection piece (11) in the manner of a parallelogram, and in that the bore hole (19) of the extension arm is provided in one of the lever parts (5, 8).

4. Stand according to Claim 3, characterized in that the two lever parts (5, 8) each have an abutment (13, 15) to receive the free ends of the gas pressure spring (14), and in that one (15) of the abutments can be moved to a greater distance in relation to the other (13) in the locked state.

5. Stand according to Claim 4, characterized in that one of the abutments (15) has a threaded bore hole (17), in the end of which, facing away from the gas pressure spring, a screw (18) is provided, against which the gas pressure spring (14) rests.

6. Stand according to Claim 5, characterized in that the gas pressure spring (14) can be removed from the abutments (13, 15) in a completely unstressed state by at least partial unscrewing of the screw (18).

7. Stand according to one of Claims 4 to 6, characterized in that the abutments (13, 15) are constructed as holes, in which the inserted ends of the gas pressure spring have a clearance within an angular range about the mid-axis.

## Revendications

1. Support comportant une colonne (2) et un bras (3), qui lui est relié et peut pivoter autour d'un axe, et un ressort de pression à gaz (14) pour l'équilibrage des masses, avec lequel le bras (3) peut être verrouillé par rapport à la colonne (2), caractérisé en ce qu'il est prévu un verrouillage (19, 20, 21) à engagement positif qui ne peut se produire que dans la position où le ressort de pression à gaz (14) se trouve en position au moins presque avancée et détendue.

2. Support selon la revendication 1, caractérisé en ce que le bras (3) et la colonne (2) présentent, pour le verrouillage à engagement positif, des trous (19, 20) pour recevoir un élément de blocage (21) lesquels trous coïncident uniquement dans la position pivotée du bras, position dans laquelle le ressort de pression à gaz (14) se trouve en position au moins presque avancée et détendue.

3. Support selon la revendication 2, caractérisé en ce que le bras comporte un premier élément de levier (5) et un deuxième élément de levier (8) pouvant se déplacer par rapport au premier, lesquels sont respectivement articulés sur la colonne (2) par l'une de leurs extrémités et sur une pièce de raccordement (11) par leur autre extrémité, à la manière d'un parallélogramme, et que le trou (19) du bras est prévu dans un des éléments de levier (5, 8).

4. Support selon la revendication 3, caractérisé en ce que les deux éléments de levier (5, 8) présentent respectivement une butée (13, 15) pour la réception des extrémités libres du ressort de pression à gaz (14) et que la butée (15), en position verrouillée, peut être déplacée sur une plus grande distance que l'autre butée (13).

5. Support selon la revendication 4, caractérisé en ce que la butée (15) présente un trou fileté (17) dans lequel est prévue, dans son extrémité opposée au ressort de pression à gaz, une vis (18) contre laquelle s'applique le ressort de pression à gaz (14).

6. Support selon la revendication 5, caractérisé en ce que le ressort de pression à gaz (14) peut être retiré des butées (13, 15) à l'état complètement détendu au moyen d'un desserrage au moins partiel de la vis (18).

7. Support selon l'une des revendications 4 à 6, caractérisé en ce que les butées (13, 15) sont réalisées sous la forme de trous dans lesquels les extrémités insérées du ressort de pression à gaz présentent un jeu à l'intérieur d'une zone annulaire autour de l'axe médian.

Fig.2

Fig.1

EP 0 271 729 B1